# EUROPEAN PATENT APPLICATION

(11) **EP 4 633 179 A1**
(43) Date of publication of application: **15.10.2025**
(21) Application number: 25168699.4
(22) Date of filing: 04.04.2025
(51) Int. Cl.: H04N 23/55, B60R 1/28, H04N 23/58

(54) **AN ELECTRONIC SIDE CAMERA SYSTEM AND CONTROL METHOD FOR FRONT AND BACK VIEW**

(30) Priority: 12.04.2024 CN 202410439597
(71) Applicant: Bayerische Motoren Werke Aktiengesellschaft, 80809 München (DE)
(72) Inventor: Li, Allen, Shenyang, 110001 (CN)

(57) **Abstract**

The invention provides an electronic side camera system, control method for a vehicle, corresponding vehicle and computer-readable storage medium, the system comprising: a lens group comprising a first lens that captures a side front view of the vehicle and a second lens that captures a side rear view of the vehicle; a sensor module configured to receive an optical image from the first lens or the second lens and output a corresponding digital image signal; an optical path guiding module configured to guide the optical image from the corresponding first lens or second lens to the sensor module according to an optical path direction; a control module communicatively coupled with the optical path guiding module configured to control the optical path direction of the optical path guiding module according to a viewing mode; and a computing module communicatively coupled with the sensor module configured to process the output digital image signal to generate a view image for display.

## Description

### FIELD OF THE INVENTION

The invention relates to a field of autopilot, and more specifically, to an electronic side camera system and control method for front and back view.

### BACKGROUND OF THE INVENTION

Current automotive rearview mirrors typically utilize glass reflective mirrors to assist in safe driving. However, traditional rearview mirrors have certain drawbacks in use due to the presence of blind spots, limited view and blurred vision under adverse weather conditions.

In this regard, technologies employing electronic rearview cameras to assist driving have already been developed. Current electronic rearview cameras can employ a combination of cameras and monitors to replace traditional optical external rearview mirrors. The display mode involves capturing images through external cameras, and then displaying them on screens within a cabin after processing.

However, the existing electronic rearview cameras can only capture a side rear view and are unable to comprehensively display the surrounding environment of the vehicle, such as the side front environment of the vehicle, or additional sensors are required to "compensate for blind spots", which results in a limited driving view or higher costs.

Therefore, to further expand the driving view and enhance the driving safety, it is desired to provide a newly designed electronic side camera system and control method for front and back view.

### SUMMARY OF THE INVENTION

The present summary is provided to introduce some concepts that will be further described in the following specific embodiments in a simplified form. The present summary is not intended to identify key features or essential features of the claimed subject matter, nor is it intended to help determine the scope of the claimed subject matter.

According to a first aspect of the present invention, an electronic side camera system for a vehicle is provided, the system comprising: a lens group comprising a first lens that captures a side front view of the vehicle and a second lens that captures a side rear view of the vehicle; a sensor module configured to receive an optical image from the first lens or the second lens in the lens group and output a corresponding digital image signal; an optical path guiding module configured to guide the optical image from the corresponding first lens or second lens in the lens group to the sensor module according to an optical path direction; a control module communicatively coupled with the optical path guiding module configured to control the optical path direction guided by the optical path guiding module according to a viewing mode; and a computing module communicatively coupled with the sensor module configured to process the output digital image signal to generate a view image for display.

In the technical solution of the embodiment of the present invention, by designing a new electronic side camera system, which utilize only one sensor, a lens system and an optical path guiding module to monitor the front and back road conditions, the driving view is thereby expanded (for example, not only the side rear road conditions can be seen, but also the side front road conditions can be seen), further enhancing the driving safety.

According to an embodiment of the present invention, the system further comprising: a display module communicatively coupled with the computing module, the display module being configured to display the generated view image according to the viewing mode.

According to a further embodiment of the present invention, when the viewing mode is a back viewing mode, the control module is configured to adjust the optical path direction guided by the optical path guiding module to such that the optical image from the second lens in the lens group is guided to the sensor module for processing and generating a view image about the side rear.

According to a further embodiment of the present invention, when the viewing mode is a front viewing mode, the control module is configured to adjust the optical path direction guided by the optical path guiding module to such that the optical image from the first lens in the lens group is guided to the sensor module for processing and generating a view image about the side front.

According to a further embodiment of the present invention, when the viewing mode is a front and back viewing mode, the control module is configured to control the optical path direction guided by the optical path guiding module such that the optical images from the first lens and the optical images from the second lens are guided to the sensor module alternately frame by frame, and the computing module is configured to extract frames corresponding to the optical images from the first lens and frames corresponding to the optical images from the second lens, respectively, for processing and generating both a view image about the side front and a view image about the side rear.

According to a further embodiment of the present invention, the sensor module receives optical images at a frame rate greater than 50 fps.

According to a further embodiment of the present invention, the viewing mode can be set or switched manually or automatically according to different driving scenarios.

According to a further embodiment of the present invention, the computing module is further configured to recognize the generated view image based on an image recognition algorithm for target identification and classification or other autopilot functions.

According to a second aspect of the present invention, an electronic side camera control method for a vehicle is provided, the method comprising: capturing an optical image about a side front view of the vehicle using a first lens in a lens group or capturing an optical image about a side rear view of the vehicle using a second lens in the lens group; guiding the optical image from the corresponding first lens or second lens of the lens group to a sensor module for outputting a corresponding digital image signal according to an optical path direction, wherein the optical path direction is controlled according to a viewing mode; and processing the output digital image signal to generate a view image for display.

According to an embodiment of the present invention, the method further comprising: displaying the generated view image according to the viewing mode.

According to a further embodiment of the present invention, when the viewing mode is a back viewing mode, the optical path direction is adjusted such that the optical image from the second lens in the lens group is guided to the sensor module for processing and generating a view image about the side rear.

According to a further embodiment of the present invention, when the viewing mode is a front viewing mode, the optical path direction is adjusted such that the optical image from the first lens in the lens group is guided to the sensor module for processing and generating a view image about the side front.

According to a further embodiment of the present invention, when the viewing mode is a front and back viewing mode, the optical path direction is controlled such that the optical images from the first lens and the optical images from the second lens are guided to the sensor module alternately frame by frame, and frames corresponding to the optical images from the first lens and frames corresponding to the optical images from the second lens are extracted, respectively, for processing and generating both a view image about the side front and a view image about the side rear.

According to a third aspect of the present invention, a vehicle comprising the electronic side camera system of any one of aspects above is provided.

According to a fourth aspect of the present invention, a computer-readable storage medium storing instructions that, when executed, cause a vehicle to perform the method of any one of aspects above, is provided.

These and other features and advantages will become apparent by reading the following detailed description and referring to the associated accompanying drawings. It should be understood that the foregoing summary of the invention and the following detailed description are merely illustrative and are not intended to limit the claimed aspects.

### BRIEF DESCRIPTION OF THE DRAWINGS

To well understand the above features of the present invention in details, reference can be made to various embodiments, so as to describe the summary of the invention above more specifically, some aspects of which are depicted in the accompanying drawings. However, it should be noted that the accompanying drawings only show some typical aspects of the present invention, and thus should not be considered as limiting the scope of the present invention, because this description may allow other equivalent aspects.
FIG. 1 shows an electronic side camera system of the prior art.
FIG. 2 shows a schematic architectural diagram of an electronic side camera system according to an embodiment of the present invention.
FIG. 3 shows a schematic architectural diagram of a front viewing mode or a back viewing mode of an electronic side camera system according to an embodiment of the present invention.
FIG. 4 shows a schematic architectural diagram of a front and back viewing mode of an electronic side camera system according to an embodiment of the present invention.
FIG. 5 shows a schematic diagram of a scenario of performing a lane change by using an electronic side camera system according to an embodiment of the present invention.
FIG. 6 shows a schematic flowchart of an electronic side camera control method according to an embodiment of the present invention.
FIG. 7 shows an exemplary vehicle comprising an electronic side camera system according to an embodiment of the present invention.
FIG. 8 shows a schematic architectural diagram of a system for implementing an electronic side camera control method according to an embodiment of the present invention.

### DETAILED DESCRIPTION

The present invention will be described in detail below in conjunction with the accompanying drawings, and the characteristics of the present invention will be further shown in the following detailed description. The term "vehicle" as used throughout this description refers to any type of automobile including, but not limited to, cars, vans, trucks, buses, etc. For simplicity, the present invention is described in terms of "vehicle". The term "A or B" as used in the description means "A and B" and "A or B" and does not imply that A and B are exclusive, unless otherwise specified.

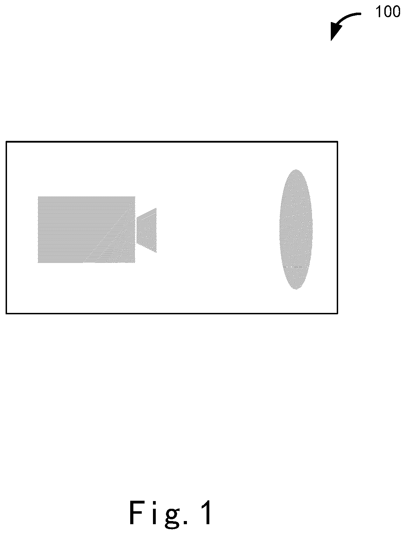

Figure 1 shows an electronic side camera system 100 of the prior art. As shown in FIG. 1, the existing electronic side camera system (also referred to as rearview mirror system) may include an image sensor (for example, a CMOS photosensitive element) and a lens, wherein a target object generates an optical image through the lens, which is projected onto the image sensor. The optical signal is then converted into an electrical signal, which undergoes A/D conversion (analog-to-digital conversion) to become a digital image signal. This signal is subsequently sent to a digital signal processing (DSP) chip for further processing. The DSP processes the signal into an image of a specific format and transmits it to a display screen (for example, the screen can be positioned on both sides of the left and right A-pillars inside the vehicle or on both sides of a dashboard) for display.

However, the existing electronic side camera system still have the problem of limited driving view and are unable to comprehensively display the surrounding environment of the vehicle, such as the side front environment of the vehicle, or additional sensors are required to "compensate for blind spots" (for example, compensate for blind spots in the side front or side rear wide-angle view of the vehicle), which results in higher costs.

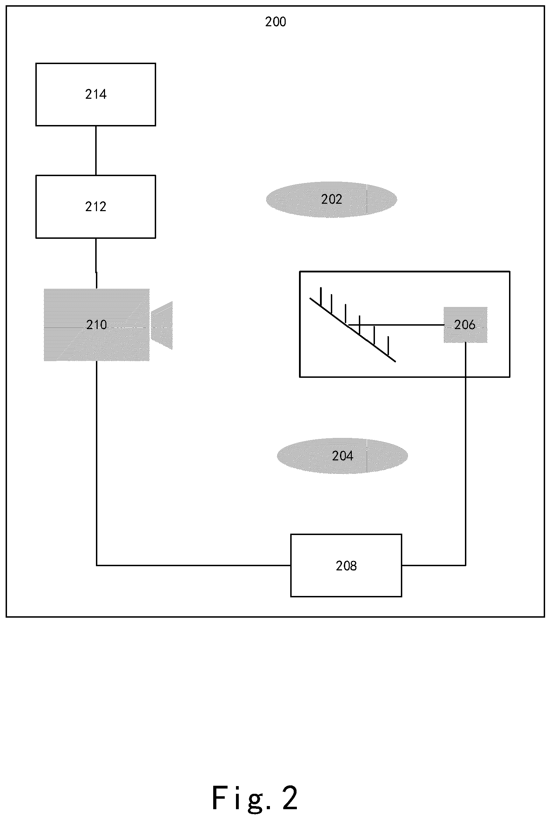

To address the problems mentioned above, the present invention designs a new electronic side camera system. Unlike systems that are limited to "rearview" functionality, this system achieves front and back viewing camera system using only one image sensor, thereby further expanding the driving view and enhancing the driving safety. The following will be described in further detail in FIG. 2.

FIG. 2 shows a schematic architectural diagram of an electronic side camera system 200 for a vehicle according to an embodiment of the present invention.

As shown in Figure 2, the electronic side camera system 200 may include at least a lens group (which may comprise a first lens 202 for capturing a side front view of the vehicle and a second lens 204 for capturing a side rear view of the vehicle), an optical path guiding module 206, a control module 208 communicatively coupled with the optical path guiding module 206, a sensor module 210, and a computing module 212 communicatively coupled with the sensor module 210. Additionally, the electronic side camera system 200 may further include a display module 214 communicatively coupled with the computing module 212.

In some aspects, the first lens 202 in the lens group (also referred to as a forward lens) and the second lens 204 in the lens group (also referred to as a rearward lens) may be used to capture the side front view and the side rear view of the vehicle, respectively, thereby generating optical images of the side front environment and the side rear environment of the vehicle for projection onto the image sensor.

Instead of directly projecting the optical image captured through the lens onto the image sensor, the optical path guiding module 206 may guide the optical image from the corresponding first lens or second lens in the lens group to the sensor module 210 according to an optical path direction. In other words, by introducing the optical path guiding module 206 to adjust the optical path direction, the captured optical images of the side front road conditions or side rear road conditions can be guided to (or projected onto) the sensor module 210 as needed.

The aforementioned optical path direction may be controlled by the control module 208, which is communicatively coupled with the optical path guiding module 206, according to a viewing mode. In other words, the control module 208 may control the direction of the optical path guiding module 206, thereby in turn adjusting the optical path direction guided by the optical path guiding module 206.

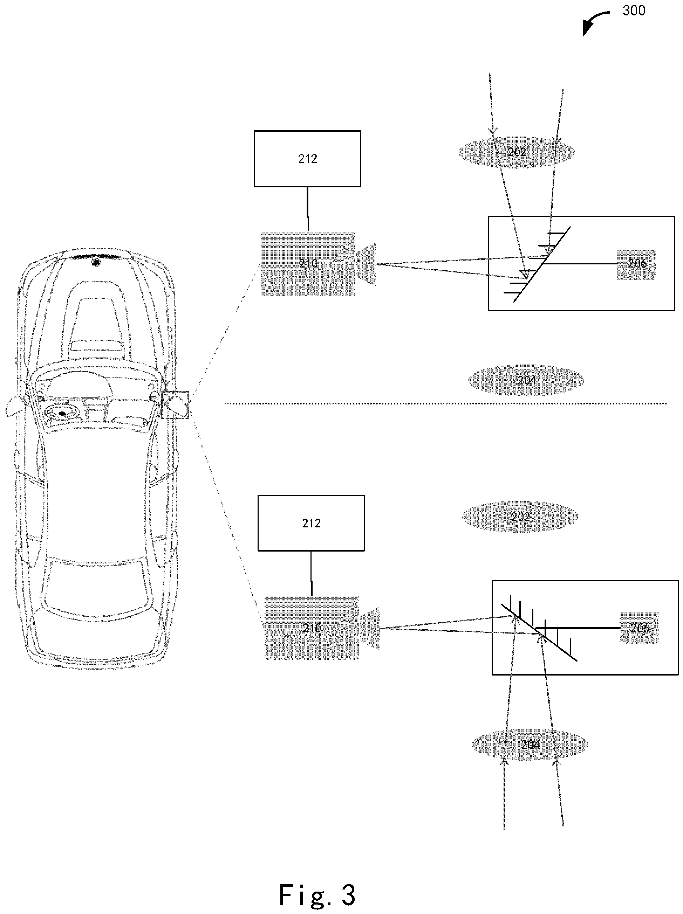

In some aspects, the viewing mode may include, for example, a front viewing only mode, a back viewing only mode or a front and back viewing mode. Examples of controlling the optical path direction according to different viewing modes will be further described in detail below with reference to FIGS. 3-4.

In one embodiment, the viewing mode may be manually set or switched, or automatically set or switched according to different driving scenarios (for example, automatically activating or switching to the front and back viewing mode in a lane change scenario to more comprehensively sense the surrounding road conditions).

The sensor module 210 may receive an optical image from the first lens 202 or the second lens 204 in the lens group and output a corresponding digital image signal.

The computing module 212 may process the output digital image signal to generate a view image for display.

Furthermore, the computing module 212 may recognize the generated view image based on an image recognition algorithm for target identification and classification or other autopilot functions.

The display module 214 may then display the generated view image according to the viewing mode, for example, display the generated view image of the side front road conditions in the front viewing mode.

In one embodiment, the display module 214 may be positioned on the left and right A-pillars, on both sides of a dashboard or at any other suitable location within a cabin.

Those skilled in the art may understand that, the electronic side camera system of the present invention can be implemented either in hardware or in software, and respective modules can be merged or combined in any suitable manner. Of course, further consideration may be given to different perspectives (further including a forward wide-angle lens, a rearward wide-angle lens, etc.) to further expand the driving view.

FIG. 3 shows a schematic architectural diagram 300 of a front viewing mode or a back viewing mode of an electronic side camera system according to an embodiment of the present invention. Herein, for the sake of brevity, the control module 208 and the display module 214, which are disposed between the optical path guiding module 206 and the sensor module 210, are omitted.

As shown in Figure 3, in the case where "front viewing only mode" is enabled (i.e., when the viewing mode is front viewing mode), the optical path direction guided by the optical path guiding module 206 may be adjusted by the control module 208 such that the optical image from the forward lens 202 is guided to the sensor module 210 for processing and generating a view image about the side front. The optical path direction is indicated by the solid arrows in FIG. 3.

In a further embodiment, in the scenario of "front viewing mode", visual penetration may be achieved, for example, in combination with a front viewing camera, thereby enabling clear visibility of the side front road conditions even when the forward line of sight is obstructed, thus further enhancing the driving safety.

Additionally, in the case where "back viewing only mode" is enabled (i.e., when the viewing mode is back viewing mode), the optical path direction guided by the optical path guiding module 206 may be adjusted by the control module 208 such that the optical image from the rearward lens 204 is guided to the sensor module 210 for processing and generating a view image about the side rear, which is similar to traditional rearview mirrors.

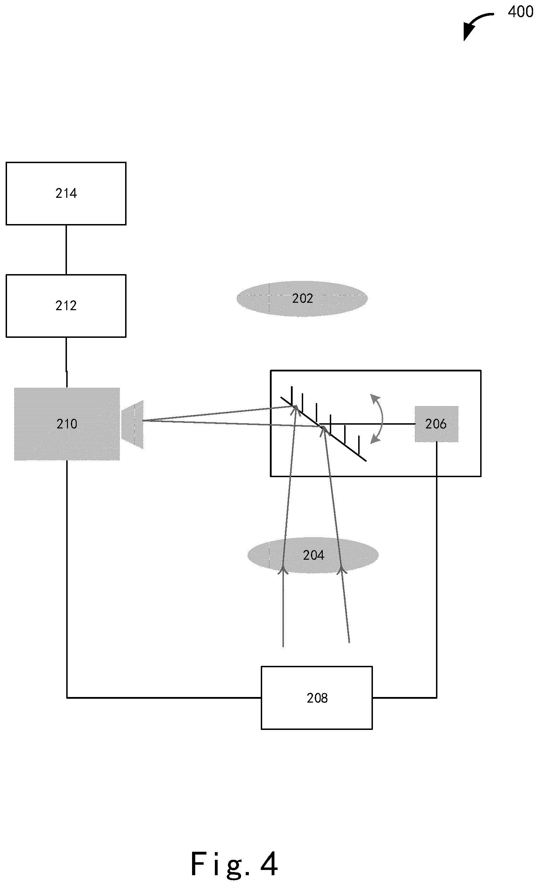

FIG. 4 shows a schematic architectural diagram 400 of a front and back viewing mode of an electronic side camera system according to an embodiment of the present invention.

As shown in Figure 4, in the case where the "front and back viewing mode" is enabled (i.e., when the viewing mode is front and back viewing mode), the optical path direction guided by the optical path guiding module 206 may be adjusted by the control module 208 such that the optical images from the forward lens 202 and the optical images from the rearward lens 204 are guided to the sensor module 210 alternately frame by frame.

In other words, the sensor module 210 may sequentially receive, frame by frame, the optical images from the forward lens 202 and the optical images from the rearward lens 204. This means that if the nth frame is an optical image from the forward lens 202, the (n+1)th frame will be an optical image from the rearward lens 204.

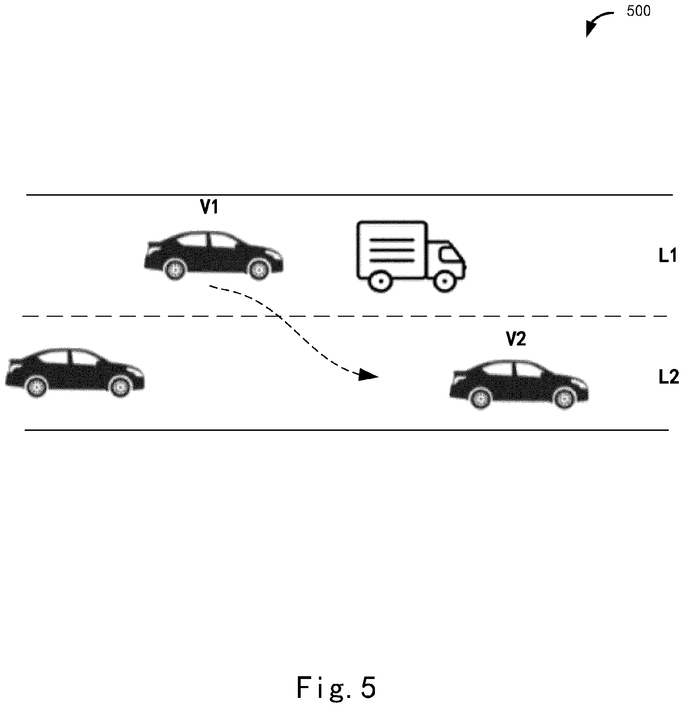

A specific exemplary scenario for enabling the "front and back viewing mode" is further described in detail below with reference to FIG. 5.

Preferably, to avoid perceptible image discontinuity, the sensor module needs to receive the optical images at a frame rate greater than 50 fps.

Subsequently, the computing module 212 may respectively extract frames corresponding to optical images from the forward lens 202 and frames corresponding to optical images from the rearward lens 204, and combine and process the corresponding frames to generate both view images about the side front (also referred to as a front view image) and view images about the side rear (also referred to as a rear view image).

Thus, by switching among the aforementioned "viewing modes" (which may include, for example, front viewing mode, back viewing mode or front and back viewing mode), for example, switching either on-demand or automatically based on driving scenarios, the driving view can be further expanded, thus avoiding impacts from adverse weather conditions and enhancing the driving safety.

FIG. 5 shows an exemplary scenario 500 of performing a lane change with restricted visibility by using an electronic side camera system according to an embodiment of the present invention.

As shown in FIG. 5, an ego vehicle V1 is traveling in a current lane L1, and the driver's line of sight may be obstructed by a truck moving slowly ahead of the ego vehicle. As a result, the driver is unable to clearly observe vehicles in the side front area. When the ego vehicle intends to change lane to a target lane L2, the driver can only observe vehicles in the side rear area through the rearview mirror. If, at this moment, a vehicle V2 is traveling slowly in the target lane in the side front of the ego vehicle, and the driver is unable to see this vehicle due to the obstruction caused by the truck, a traffic accident may occur as a result of the lane change.

By utilizing the electronic side camera system of the present application and enabling the "front and back viewing mode," the sensor module can sequentially receive, frame by frame, optical images from the forward lens and the rearward lens. The computing module can extract frames corresponding to the optical images from the forward lens and the rearward lens, respectively, and then combine and process the corresponding frames to generate both a front view image and a rear view image. These images can then be displayed on the display screen within the vehicle.

Thus, in this scenario, the driver can not only observe the situation of side rear vehicles approaching but also view side front vehicles in the target lane, thereby avoiding or reducing the risk of accidents caused by lane changes, for example, in situations where the line of sight is obstructed.

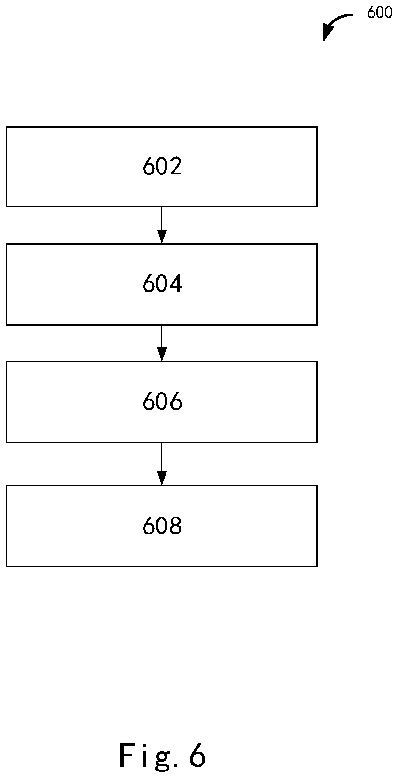

FIG. 6 shows a schematic flowchart of an electronic side camera control method 600 for a vehicle according to an embodiment of the present invention.

The method 600 begins at step 602, an optical image about a side front view of the vehicle may be captured using a first lens in a lens group or an optical image about a side rear view of the vehicle may be captured using a second lens in the lens group.

At step 604, the optical image from the corresponding first lens or second lens of the lens group may be guided to a sensor module for outputting a corresponding digital image signal according to an optical path direction, wherein the optical path direction is controlled according to a viewing mode.

In one embodiment, the viewing mode may indicate a view direction of the captured images. For example, the viewing mode may include a front viewing mode, a back viewing mode or a front and back viewing mode.

At step 606, the output digital image signal may be processed to generate a view image for display.

In the case where the viewing mode is a back viewing mode (similar to a traditional rearview mirror), the optical path direction may be adjusted such that the optical image from the second lens in the lens group is guided to the sensor module for processing and generating a view image about the side rear.

In the case where the viewing mode is a front viewing mode, the optical path direction may be adjusted such that the optical image from the first lens in the lens group is guided to the sensor module for processing and generating a view image about the side front.

In the case where the viewing mode is a front and back viewing mode, the optical path direction may be controlled such that the optical images from the first lens and the optical images from the second lens are guided to the sensor module alternately frame by frame, and frames corresponding to the optical images from the first lens and frames corresponding to the optical images from the second lens are extracted, respectively, for processing and generating both a view image about the side front and a view image about the side rear.

In one embodiment, the sensor module may receives optical images at a frame rate greater than 50 fps.

In one embodiment, the viewing mode can be set or switched manually or automatically according to different driving scenarios.

In one embodiment, the generated view images may be further recognized based on an image recognition algorithm for target identification and classification, such as lane recognition, traffic sign recognition, detection of laterally moving objects, etc., or other autopilot functions. For example, detection, classification, segmentation and other calculations can be performed based on per-frame information, and finally using multi-frame information for target tracking, thus outputting relevant results. Preferably, deep learning algorithms may also be utilized for image recognition.

At step 608, the generated view image may be displayed according to the viewing mode.

Accordingly, by adopting a newly designed electronic side camera system comprising only one image sensor, a forward and a rearward lens, and an optical path guiding module, the driving view can be further expanded, thereby enhancing the driving safety (for example, in situations where the forward line of sight is obstructed).

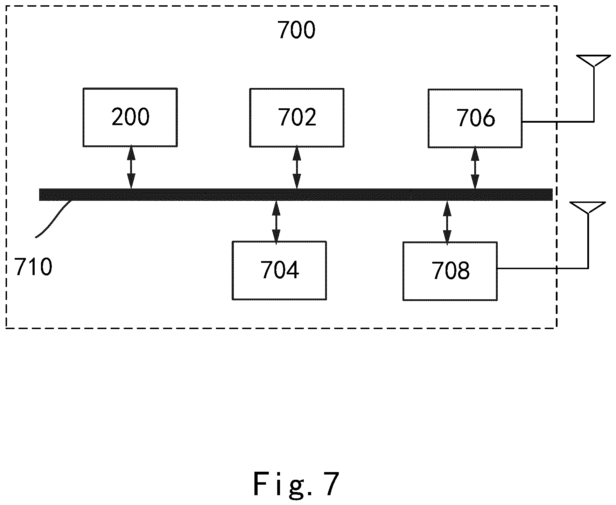

FIG. 7 shows an exemplary vehicle 700 comprising an electronic side camera system according to an embodiment of the present invention. The vehicle 700 may comprise various software and hardware components connected via a bus 710.

The vehicle may comprise the above mentioned electronic side camera system 200, which includes a lens group, the lens group comprising a first lens that captures a side front view of the vehicle and a second lens that captures a side rear view of the vehicle; a sensor module configured to receive an optical image from the first lens or the second lens in the lens group and output a corresponding digital image signal; an optical path guiding module configured to guide the optical image from the corresponding first lens or second lens in the lens group to the sensor module according to an optical path direction; a control module communicatively coupled with the optical path guiding module configured to control the optical path direction guided by the optical path guiding module according to a viewing mode; a computing module communicatively coupled with the sensor module configured to process the output digital image signal to generate a view image for display; and a display module communicatively coupled with the computing module configured to display the generated view images according to the viewing mode.

In addition, the vehicle 700 may further comprise a sensor system 702, a vehicle control system 704, a wireless transceiver 706, a Global Navigation Satellite System (GNSS) receiver 708, etc.

The sensor system 702 may comprise any suitable number of accelerometers, gyroscopes and/or magnetometers. In some embodiments, the sensor system 702 may be part of the inertial measurement unit (IMU) of the vehicle 700.The sensor system 702 may be used to provide and/or verify motion and directional information, monitor wheel and drivetrain system performance, and/or measure the oscillation amplitude and frequency of the vehicle 700 and/or its components. Additionally, the sensor system 702 may further comprise radar, LIDAR, vision sensors, etc. For example, LIDAR can provide a more reliable means of detecting the distance (and orientation) of objects, especially those with unknown sizes and shapes. LIDAR measurements can also be used to estimate travel speed, vector direction, relative position, and stopping distance by providing accurate distance measurements and incremental distance measurements.

The vehicle control system 704 (generator, battery, transmission, engine, brakes, actuators, throttle control, steering, electrical components, etc.) may be used in conjunction with performance parameters and operational parameters to autonomously drive and operate the vehicle 700 safely and accurately. This enables the vehicle 700 to merge into traffic, stop, accelerate, and perform other operations in a safe, effective, and efficient manner.

The wireless transceiver 706 may be configured to transmit and receive data messages and elements via short-range wireless communication protocols (for example, Bluetooth^{®}, Bluetooth Low Energy^{®}, etc.), and/or via a local area network (LAN) and/or a wide area network (WAN), and/or via a cellular network, and/or via any suitable wireless network. Of course, it should be understood that these are merely examples of networks that may be utilized by the vehicle 700 over a wireless link, and the claimed subject matter should not be limited in this regard. In one embodiment, the wireless transceiver 706 may comprise various combinations of WAN, WLAN, and/or PAN transceivers. In one embodiment, the wireless transceiver 708 may also comprise a Bluetooth transceiver, a ZigBee transceiver, or other PAN transceivers.

The GNSS receiver 708 may be configured to receive and digitally process signals from navigation satellites (and/or other vehicles) in order to provide the receiver's position, speed and time. The GNSS receiver 708 may comprise hardware and/or software components. In one embodiment, the GNSS signals received by the GNSS receiver 708 from GNSS satellites are used by the vehicle 700 for location determination and/or for GNSS signal parameters and demodulated data determination. In one embodiment, the signals received by the wireless transceiver 706 are used alone or in combination with the GNSS signals received by the GNSS receiver 708 for location determination.

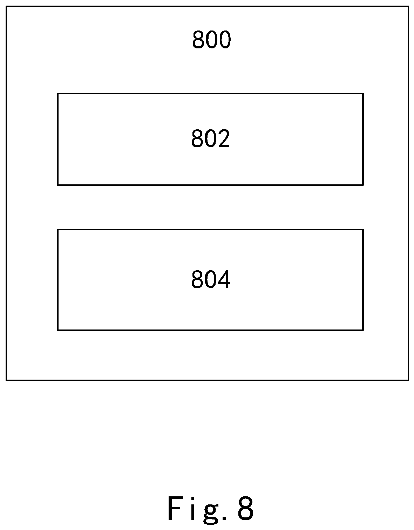

FIG. 8 shows a schematic architectural diagram of a system of an electronic side camera control method according to an embodiment of the present invention. As shown in FIG. 8, the system 800 may include a memory 802 and at least one processor 804.Memory 802 may include RAM, ROM, or a combination thereof. The memory 802 may store computer executable instructions that, when executed by at least one processor 804, cause the at least one processor 804 to execute various functions described herein, comprising: capturing an optical image about a side front view of the vehicle and an optical image about a side rear view of the vehicle; guiding these optical images to a sensor module for outputting a corresponding digital image signal according to an optical path direction, wherein the optical path direction is controlled according to a viewing mode; and processing the output digital image signal to generate a view image for display. In some cases, the memory 802 may, in particular, comprise a BIOS that may control basic hardware or software operations, such as interactions with peripheral components or devices. Processor 804 may include intelligent hardware devices (for example, general-purpose processors, DSPs, CPUs, microcontrollers, ASICs, FPGAs, programmable logic devices, discrete gate or transistor logic components, discrete hardware components, or any combination thereof).

The functions described herein may be implemented in hardware, software executed by a processor, firmware, or any combination thereof. If implemented in software executed by a processor, the respective functions may be stored on or transferred by means of a computer-readable medium as one or more instructions or codes. Other examples and implementations fall within the scope of the present disclosure and the appended claims. For example, due to the nature of software, the functions described herein may be implemented in software executed by a processor, hardware, firmware, hardwiring, or any combination thereof. Features that implement the functions may also be physically located at various locations, including being distributed so that portions of the functions are implemented at different physical locations.

The content already described above includes examples of various aspects of the claimed subject matter. Of course, it is impossible to describe every conceivable combination of components or methods for the purpose of depicting the claimed subject matter, but those of ordinary skill in the art should recognize that many further combinations and arrangements of the claimed subject matter are possible. Thus, the subject matter disclosed is intended to cover all such changes, modifications and changes falling within the spirit and scope of the appended claims.

## Claims

1. An electronic side camera system for a vehicle, the system comprising:
a lens group comprising a first lens that captures a side front view of the vehicle and a second lens that captures a side rear view of the vehicle;
a sensor module configured to receive an optical image from the first lens or the second lens in the lens group and output a corresponding digital image signal;
an optical path guiding module configured to guide the optical image from the corresponding first lens or second lens in the lens group to the sensor module according to an optical path direction;
a control module communicatively coupled with the optical path guiding module configured to control the optical path direction guided by the optical path guiding module according to a viewing mode; and
a computing module communicatively coupled with the sensor module configured to process the output digital image signal to generate a view image for display.

2. The system of Claim 1, further comprising:
a display module communicatively coupled with the computing module, the display module being configured to display the generated view image according to the viewing mode.

3. The system of Claim 1, wherein when the viewing mode is a back viewing mode, the control module is configured to adjust the optical path direction guided by the optical path guiding module to such that the optical image from the second lens in the lens group is guided to the sensor module for processing and generating a view image about the side rear.

4. The system of Claim 1, wherein when the viewing mode is a front viewing mode, the control module is configured to adjust the optical path direction guided by the optical path guiding module to such that the optical image from the first lens in the lens group is guided to the sensor module for processing and generating a view image about the side front.

5. The system of Claim 1, wherein when the viewing mode is a front and back viewing mode,
the control module is configured to control the optical path direction guided by the optical path guiding module such that the optical images from the first lens and the optical images from the second lens are guided to the sensor module alternately frame by frame, and
the computing module is configured to extract frames corresponding to the optical images from the first lens and frames corresponding to the optical images from the second lens, respectively, for processing and generating both a view image about the side front and a view image about the side rear.

6. The system of Claim 5, wherein the sensor module receives optical images at a frame rate greater than 50 fps.

7. The system of Claim 1, wherein the viewing mode can be set or switched manually or automatically according to different driving scenarios.

8. The system of Claim 1, wherein the computing module is further configured to recognize the generated view image based on an image recognition algorithm for target identification and classification or other autopilot functions.

9. An electronic side camera control method for a vehicle, comprising:
capturing an optical image about a side front view of the vehicle using a first lens in a lens group or capturing an optical image about a side rear view of the vehicle using a second lens in the lens group;
guiding the optical image from the corresponding first lens or second lens of the lens group to a sensor module for outputting a corresponding digital image signal according to an optical path direction, wherein the optical path direction is controlled according to a viewing mode; and
processing the output digital image signal to generate a view image for display.

10. The method of claim 9, further comprising:
displaying the generated view image according to the viewing mode.

11. The method of Claim 9, wherein when the viewing mode is a back viewing mode, the optical path direction is adjusted such that the optical image from the second lens in the lens group is guided to the sensor module for processing and generating a view image about the side rear.

12. The method of Claim 9, wherein when the viewing mode is a front viewing mode, the optical path direction is adjusted such that the optical image from the first lens in the lens group is guided to the sensor module for processing and generating a view image about the side front.

13. The method of Claim 9, wherein when the viewing mode is a front and back viewing mode,
the optical path direction is controlled such that the optical images from the first lens and the optical images from the second lens are guided to the sensor module alternately frame by frame, and
frames corresponding to the optical images from the first lens and frames corresponding to the optical images from the second lens are extracted, respectively, for processing and generating both a view image about the side front and a view image about the side rear.

14. A vehicle comprising the electronic side camera system of any of claims 1-8.

15. A computer-readable storage medium storing instructions that, when executed, cause a vehicle to perform the method of any of claims 9-13.
